# EUROPÄISCHE PATENTSCHRIFT

(11) **EP 0 886 555 B1**
(45) Veröffentlichungstag und Bekanntmachung des Hinweises auf die Patenterteilung: **29.08.2001**
(21) Anmeldenummer: 97905148.9
(22) Anmeldetag: 03.03.1997
(51) Int. Cl.: B23K 26/12

(54) **VERFAHREN ZUM LASERSCHNEIDEN METALLISCHER WERKSTÜCKE**
METHOD OF LASER CUTTING METAL WORKPIECES
PROCEDE DE DECOUPAGE AU LASER DE PIECES METALLIQUES

(30) Priorität: 15.03.1996 DE 19610298
(43) Veröffentlichungstag der Anmeldung: 30.12.1998
(73) Patentinhaber: AGA AKTIEBOLAG, 181 81 Lidingö (SE)
(72) Erfinder: FAERBER, Mark, D-22453 Hamburg (DE)
(74) Vertreter: Glawe, Delfs, Moll & Partner
(86) Internationale Anmeldenummer: EP9701051
(87) Internationale Veröffentlichungsnummer: WO9734730

(56) Entgegenhaltungen:
- WO-A-94/04306
- WO-A-94/13424
- DE-A- 4 123 716
- PATENT ABSTRACTS OF JAPAN vol. 013, no. 170 (M-817), 21.April 1989 & JP 01 005692 A (MITSUBISHI ELECTRIC CORP), 10.Januar 1989,
- PATENT ABSTRACTS OF JAPAN vol. 014, no. 177 (M-0960), 9.April 1990 & JP 02 030389 A (KOMATSU LTD), 31.Januar 1990,
- SPIE, Bd. 2207, 5. - 8.April 1994, VIENNA (AT), Seiten 96-110, XP000671656 K.-U. PREIRIG ET AL.: "High speed laser cutting of thin metal sheets" in der Anmeldung erwähnt

## Beschreibung

Die Erfindung betrifft ein Verfahren zum Laserschneiden von gebundenen Sanerstoff enthaltenden metallischen Werkstücken.

Beim Laserschneiden von metallischen Werkstücken wird ein Laserstrahl auf das zu schneidende Werkstück fokussiert. Häufig wird gleichzeitig ein Schneidgas mittels einer Düse auf die Schnittstelle geblasen. Das Schneidgas soll die Düse der Schneidanlage und die darin enthaltene Fokussierlinse vor während des Schneidprozesses gebildeten Metallspritzern und Schlacke schützen und gleichzeitig das Ausspülen des geschmolzenen Materials und der Schlacke aus dem Brennschnittspalt unterstützen. In vielen Fällen wird als Schneidgas Sauerstoff oder ein sauerstoffhaltiges Gasgemisch verwendet. Die chemische Reaktion des Sauerstoffs mit dem geschnittenen Material (beispielsweise Stahl) erzeugt zusätzliche Hitze, die den Schneidprozeß unterstützen. Es findet dann eine Stahlverbrennung statt.

Der Fachmann unterscheidet beim Laserschneiden zwischen herkömmlichem Laserschneiden mit einer Schneidgeschwindigkeit von maximal 10 m/min und dem Hochgeschwindigkeitsschneiden dünner Bleche mit Schneidgeschwindigkeiten bis zu 100 m/min (Preißig et al., High speed laser cutting of thin metal sheets, SPIE Vol. 2207, 96 - 110). Im Rahmen des Hochgeschwindigkeitsschneidens dünner Bleche ist es aus DE-A 4123716 bereits bekannt, als Schneidgas eine Mischung von Inertgas und Wasserstoff zu verwenden. Beim Hochgeschwindigkeitsschneiden wird die Schneidgeschwindigkeit durch sog. Schmelzstauerscheinungen begrenzt. Die hohe Viskosität der beim Schneiden entstehenden Schmelze begrenzt die erzielbare Geschwindigkeit. DE-A 4123716 lehrt den Fachmann, daß der Wasserstoffzusatz im Schneidgas die Oberflächenspannung der Schmelze verringert und so deren Aufstauung entgegenwirkt.

Der Erfindung liegt die Aufgabe zugrunde, ein Verfahren der eingangs genannten Art zu schaffen, mit dem sich gebundene Sauerstoff enthaltende metallische Werkstücke sauber schneiden lassen.

Die Erfindung löst diese Aufgabe dadurch, daß als Schneidgas eine Mischung aus wenigstens einem Inertgas und Wasserstoff verwendet wird.

Im Rahmen der Erfindung bezeichnet der Begriff Inertgas jedes Gas und jede Gasmischung, das bzw. die unter den beim Schneiden auftretenden Bedingungen keine oder nur geringfügige chemische Reaktionen mit dem zu schneidenden Werkstück, den beim Schneiden entstehenden Reaktionsprodukten und/oder der Umgebungsatmosphäre eingeht. Verwendbare Inertgase sind beispielsweise Edelgase, Stickstoff sowie Mischungen daraus. Unter den Edelgasen ist Argon besonders bevorzugt.

Der Begriff "gebundenen Sauerstoff enthaltende metallische Werkstücke" umfaßt sämtliche Metalle, die zumindest in Teilbereichen (beispielsweise an der Oberfläche) chemisch gebundenen Sauerstoff der Oxidationsstufe II- enthalten. Typische Beispiele sind Metalle, die ihre Beständigkeit gegenüber Umwelteinflüssen durch eine Oxidschicht an der Oberfläche erhalten (beispielsweise Aluminium und dessen Legierungen).

Die Erfindung hat erkannt, daß bei solchen Metallen ein unsauberer Schnitt und ein Anlaufen des zu schneidenden Materials durch die erfindungsgemäße Schneidgasmischung vermieden werden kann. Überraschenderweise vermeidet bzw. vermindert der Wasserstoffzusatz diese unerwünschten Effekte.

Der gebundene Sauerstoff im Metall führt offensichtlich zu einem unsauberen Schnitt (beispielsweise Gratbildung), zu Oxidationen im Bereich der Schnittkante und zu Anlaufen des Metalls im Bereich der Schnittkante. Schon dies ist aus dem Stand der Technik nicht ableitbar, da dort in der Regel gerade Sauerstoff zur Verbesserung der Schneidleistung zugesetzt wird.

Die Erfindung beruht weiterhin auf der Erkenntnis, daß sich diese unerwünschte Wirkung des im Metall gebundenen Sauerstoffs durch Wasserstoffzusatz zu einem ansonsten inerten Schneidgas vermeiden bzw. verringern läßt. Dies ist insofern überraschend, als daß eigentlich zu erwarten wäre, daß der beim Schneidvorgang möglicherweise aus seiner Bindung mit dem Metall gelöste und dann zunächst atomar frei werdende Sauerstoff in der Metallmatrix sofort weiterreagiert und dort zu erneuten Oxidationsreaktionen führt. Statt dessen hat sich gezeigt, daß offensichtlich die Affinität dieses Sauerstoffs zu in molekularer Form an der Schneidstelle vorbeigeführtem Wasserstoff höher ist und deshalb der Sauerstoff durch den Wasserstoff gebunden und abgeführt wird. Selbst bei verhältnismäßig niedrigen Wasserstoffkonzentrationen im Schneidgas tritt diese Wirkung auf.

Der technische Effekt des Wasserstoffzusatzes im Rahmen der Erfindung ist also ein völlig anderer als beim Hochgeschwindigkeitsschneiden dünner Bleche gemäß DE-A 4123716. Dort liegt dessen gewünschte Wirkung lediglich darin, die Oberflächenspannung der Schmelze zu verringern, um schnelleres Schneiden zu ermöglichen.

Das Schneidgas enthält zweckmäßigerweise 1 - 30, vorzugsweise 3 - 25, weiter vorzugsweise 5- 15 Vol.-% Wasserstoff.

Besonders bevorzugt ist das erfindungsgemäße Verfahren bei metallischen Werkstücken anzuwenden, die eine Oxidschicht aufweisen. Im Rahmen der Erfindung ist der Begriff "Oxidschicht" weit zu verstehen und umfaßt alle Schichten, in denen Sauerstoff in der Oxidationsstufe II- in einem Kristallgitter gebunden vorkommt. Dabei kann es sich beispielsweise um Schichten aus Oxiden, Hydroxiden, Carbonaten, Sulfaten sowie Mischungen daraus handeln. Ferner fallen unter diesen Begriff Schichten aus Mischkristallen wie z. B. Spinellen.

Die Werkstücke können aus Aluminium oder einer Aluminiumlegierung bestehen. Aluminium wird bekanntlich an Luft sofort durch Ausbildung einer oberflächlichen Oxidschicht inertisiert. Diese Oxidschicht ist kein reines Aluminiumoxid, sie umfaßt in der Regel auch Mischformen aus Oxiden und Hydroxiden. Bei Aluminiumlegierungen können an der Oberfläche ggf. auch Mischoxide wie beispielsweise Spinelle entstehen.

Besonders vorteilhaft ist das erfindungsgemäße Verfahren bei Werkstücken aus eloxiertem Aluminium oder einer eloxierten Aluminiumlegierung anwendbar. Bei eloxiertem Aluminium ist die Oxidschicht künstlich (in der Regel galvanisch) verstärkt. Das erfindungsgemäße Verfahren zeigt bei diesen Materialien eine besonders deutliche Verbesserung der Schnittqualität.

Die Schneidgeschwindigkeit liegt bei dem erfindungsgemäßen Verfahren vorteilhafterweise zwischen 1 und 10 m/min. Es handelt sich um Geschwindigkeiten, die im Bereich des sog. konventionellen Laserschneidens angesiedelt sind. Abhängig insbesondere von Materialdicke und Laserleistung kann die Schneidgeschwindigkeit auch unterhalb 1 m/min liegen.

Ein Ausführungsbeispiel der Erfindung wird im folgenden anhand der Zeichnung beschrieben, die schematisch den Aufbau wesentlicher Elemente einer Laserschneidanlage zeigt.

Ein Laserstrahl 1 wird mittels einer Fokussierungslinse 2 auf das zu schneidende Werkstück 6 gerichtet. Dabei tritt er durch eine Düse 3 und deren Mundstück 11 hindurch. Der Laser selbst ist in der Zeichnung nicht dargestellt, geeignete Laser sind dem Fachmann geläufig. Beispielsweise kann ein CO₂ Laser oder Feststofflaser wie z. B. ein Nd:YAG Laser verwendet werden. Geeignete Strahlleistungen liegen beispielsweise im Bereich 1 bis 2, bevorzugt 1,5 kW. Die Fokussierungslinse 2 fokussiert den Laserstrahl vorzugsweise auf die Unterseite des zu schneidenden Werkstücks (Blechs). Der Durchmesser der Öffnung des Düsenmundstücks 11 kann im Bereich 0,8 bis 1,5, vorzugsweise. 1,2 bis 1,5 mm liegen. Der Abstand des Düsenmundstücks 11 von der Oberfläche des Werkstücks 6 liegt bevorzugt im Bereich 0,25 bis 0,6 mm.

Die Düse 3 weist eine Zufuhrleitung 5 auf, durch die Schneidgas in eine Kammer 4 geführt wird. Als Schneidgas wird bei diesem Ausführungsbeispiel einer N₂/H₂-Mischung mit einem Wasserstoffanteil von 10 Vol-.% verwendet. Der Druck des zugeführten Schneidgases liegt zwischen 10 und 15 bar.

Das zu schneidende Blech 6 stützt sich auf einer Tragvorrichtung 9 ab. Diese weist eine Öffnung 10 auf, durch die beim Schneiden entstehende Metallrückstände und Schlacke 12 austreten können. Die Düse 3 stützt sich mittels einer Stützvorrichtung 7, die Lagerkugeln 8 aufweist, auf dem Blech 6 ab.

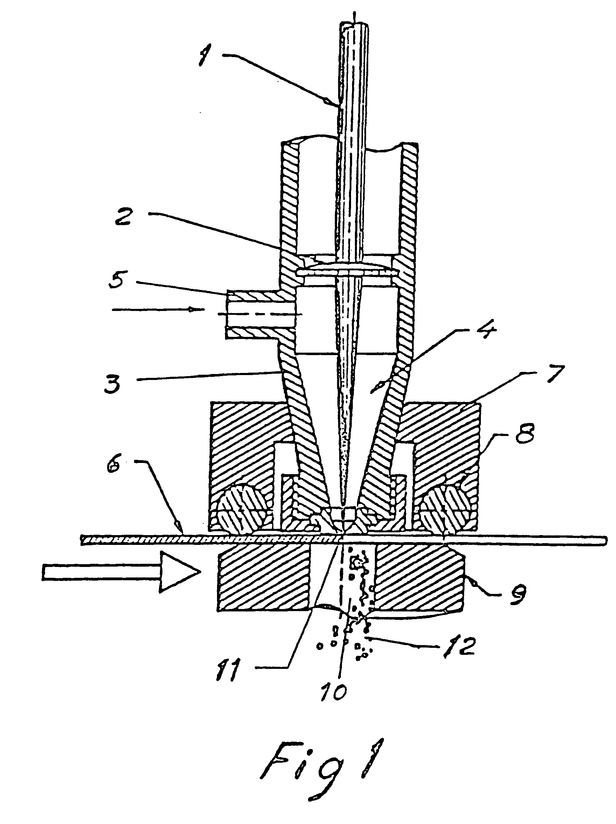

Während des Schneidens wird das Blech 6 mit einer Geschwindigkeit von 1 m/min in Richtung des in Fig. 1 gezeigten Pfeils durch die Schneidvorrichtung geführt. Chemisch im Metall gebundener und beim Schneiden freiwerdender Sauerstoff wird vom Wasserstoffanteil des Schneidgases gebunden und abgeführt, bevor es im Bereich der Schneidstelle zu unerwünschten Oxidationen kommen kann. Riefigkeit und Bartbildung im Bereich der Schnittstelle werden vermieden oder verringert.

Eine beispielhafte Anwendung des erfindungsgemäßen Verfahrens ist das Schneiden von Aluminiumlegierungen wie AlMg3 und AlMgSi1 mit einer Materialstärke von 2 mm. Bei nicht eloxierten Blechen aus diesen Legierungen bewirkt das erfindungsgemäße Verfahren schon eine deutliche Verbesserung der Schnittqualität. Noch ausgeprägter ist diese Verbesserung bei eloxierten Blechen, die eine dickere Oxidschicht aufweisen und in deren Oberflächenbereichen mehr Sauerstoff gebunden ist.

## Patentansprüche

1. Verfahren zum Laserschneiden von gebundenen Sauerstoff enthaltenden metallischen Werkstücken mit einer Schneidgeschwindigkeit von maximal 10 m/min, wobei als Schneidgas eine Mischung aus wenigstens einem Inertgas und Wasserstoff verwendet wird.

2. Verfahren nach Anspruch 1, **dadurch gekennzeichnet**, daß das Schneidgas als Inertgas wenigstens ein Edelgas und/oder Stickstoff enthält.

3. Verfahren nach Anspruch 2, **dadurch gekennzeichnet**, daß das Schneidgas Argon und/oder Stickstoff enthält.

4. Verfahren nach einem der Ansprüche 1 bis 3, **dadurch gekennzeichnet**, daß das Schneidgas 1 - 30, vorzugsweise 3 - 25, weiter vorzugsweise 5 - 15 Vol.-% Wasserstoff enthält.

5. Verfahren nach einem der Ansprüche 1 bis 4, **dadurch gekennzeichnet**, daß die metallischen Werkstücke eine Oxidschicht aufweisen.

6. Verfahren nach Anspruch 5, **dadurch gekennzeichnet**, daß die Werkstücke aus Aluminium oder einer Aluminiumlegierung bestehen.

7. Verfahren nach Anspruch 6, **dadurch gekennzeichnet**, daß die Werkstücke aus eloxiertem Aluminium oder einer eloxierten Aluminiumlegierung bestehen.

8. Verfahren nach einem der Ansprüche 1 bis 7, **dadurch gekennzeichnet**, daß die Schneidgeschwindigkeit zwischen 1 und 10 m/min liegt.

## Claims

1. Process for the laser cutting of metal workpieces which contain bonded oxygen, with a cutting rate of at most 10 m/min, the cutting gas used being a mixture of at least one inert gas and hydrogen.

2. Process according to Claim 1, **characterized in that** the cutting gas contains at least one noble gas and/or nitrogen as the inert gas.

3. Process according to Claim 2, **characterized in that** the cutting gas contains argon and/or nitrogen.

4. Process according to one of Claims 1 to 3, **characterized in that** the cutting gas contains 1-30, preferably 3-25, more preferably 5-15% by volume of hydrogen.

5. Process according to one of Claims 1 to 4, **characterized in that** the metal workpieces have a layer of oxide.

6. Process according to Claim 5, **characterized in that** the workpieces comprise aluminium or an aluminium alloy.

7. Process according to Claim 6, **characterized in that** the workpieces comprise anodized aluminium or an anodized aluminium alloy.

8. Process according to one of Claims 1 to 7, **characterized in that** the cutting speed lies between 1 and 10 m/min.

## Revendications

1. Procédé de découpage au laser de pièces métalliques comportant de l'oxygène lié, avec une vitesse de coupe de 10m/min maximum, dans lequel un mélange d'au moins un gaz inerte et d'hydrogène est employé comme gaz de découpage.

2. Procédé selon la revendication 1, **caractérisé en ce que** le gaz de découpage contient comme gaz inerte au moins un gaz rare et/ou de l'azote.

3. Procédé selon la revendication 2, **caractérisé en ce que** le gaz de découpage contient de l'Argon et/ou de l'azote.

4. Procédé selon l'une des revendications 1 à 3, **caractérisé en ce que** le gaz de découpage contient 1 à 30, de préférence 3 à 25 et préférentiellement 5 à 15 volumes % d'hydrogène.

5. Procédé selon l'une des revendications 1 à 4, **caractérisé en ce que** les pièces métalliques présentent une couche d'oxyde.

6. Procédé selon la revendication 5, **caractérisé en ce que** les pièces sont constituées d'aluminium ou d'un alliage d'aluminium.

7. Procédé selon la revendication 6, **caractérisé en ce que** les pièces sont constituées d'aluminium éloxydé ou d'un alliage d'aluminium éloxydé.

8. Procédé selon l'une des revendications 1 à 7, **caractérisé en ce que** la vitesse de coupe est comprise entre 1 et 10m/min.
